(19) Europäisches Patentamt
European Patent Office
Office européen des brevets

(11) **EP 2 023 092 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
***G01D 3/00*** *(2006.01)*

(21) Anmeldenummer: **08008550.9**

(22) Anmeldetag: **07.05.2008**

(54) **Positionsmessgerät und Verfahren zur Übertragung einer Bewegungsinformation**

Position measuring device and method for transmitting movement information

Appareil de mesure de position et procédé de transmission d'une information de mouvement

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.08.2007 DE 102007036542**

(43) Veröffentlichungstag der Anmeldung:
**11.02.2009 Patentblatt 2009/07**

(73) Patentinhaber: **Dr. Johannes Heidenhain GmbH 83301 Traunreut (DE)**

(72) Erfinder: **Tiemann, Marc Oliver 5020 Salzburg (AT)**

(56) Entgegenhaltungen:
**DE-A1-102006 026 879**

EP 2 023 092 B1

**Beschreibung**

Die Erfindung betrifft ein Positionsmessgerät nach Anspruch 1, sowie ein Verfahren zur Übertragung einer Bewegungsinformation nach Anspruch 12. Ein derartiges Positionsmessgerät ist insbesondere für den Einsatz in einem Antriebssystem geeignet. Mit einem erfindungsgemäßen Positionsmessgerät, bzw. einem erfindungsgemäßen Verfahren wird es ermöglicht, zusätzlich zu den Positionsdaten eine Bewegungsinformation, insbesondere eine Geschwindigkeits- und/oder Beschleunigungsinformation sehr effizient zu einer Antriebssteuerung zu übertragen.

In der Automatisierungstechnik werden häufig Antriebe eingesetzt, deren Motoren von einer numerischen Steuerung (NC) angesteuert werden. Hierzu generiert die Steuerung entsprechend einem abzuarbeitendem Programm Sollwerte, die in entsprechenden Motoransteuermodulen, sog. Umrichtern zu Ansteuersignalen für den Motor umgewandelt werden. Die aus den Ansteuersignalen resultierende Bewegung kann sowohl eine Längsbewegung, beispielsweise das Verfahren eines Werkzeugschlittens in einer Werkzeugmaschine, als auch eine Drehbewegung, beispielsweise eine sich mit einer bestimmten Drehzahl drehende Werkzeugspindel oder die Drehung eines Gelenkes eines Fertigungsroboters, sein.

Um das Ausmaß der Bewegung messen zu können, werden Positionsmessgeräte eingesetzt, im Falle einer Längsbewegung etwa lineare Positionsmessgeräte, bei Drehbewegungen entsprechend rotatorische Positionsmessgeräte, sog. Drehgeber, die direkt oder über eine Übersetzung mit einer Motorwelle gekoppelt sind. Die Steuerung ruft in regelmäßigen Zeitabständen, der sog. Reglerzykluszeit, von den Positionsmessgeräten Positionsistwerte ab, mit deren Hilfe sie wiederum neue Sollwerte für die Umrichter ermittelt. Derartige Regelkreise erlauben eine präzise Steuerung des Antriebs.

Die Übertragung der Positionswerte von den Positionsmessgeräten zur Steuerung kann rein analog, häufig in Form von zwei zueinander um 90° phasenverschobenen sinusförmigen Signalen, oder auch digital, in Form von rechteckförmigen Zählsignalen oder durch Übertragung von komplexen Datenworten über Datenschnittstellen erfolgen. In modernen Positionsmessgeräten werden heute vor allem serielle Datenschnittstellen bevorzugt, da sie nur eine geringe Anzahl von Leitungen für die Datenübertragung erfordern und die Übertragung von absoluten Positionswerten ermöglichen.

Zur Ermittlung der Sollwerte für die Regelkreise benötigt die Antriebssteuerung neben den Positionsistwerten auch noch weitere Bewegungsdaten, wie z.B. die aktuelle Geschwindigkeit, bzw. Drehzahl, oder auch die Beschleunigung. Es ist allgemein bekannt, dass sich beispielsweise die Geschwindigkeit bei bekannter Reglerzykluszeit aus zwei aufeinander folgend gemessenen Positionswerten durch Bildung des Differenzenquotienten ableiten lässt. Ebenso kann die Beschleunigung mit Hilfe von drei aufeinander folgend gemessenen Positionswerten, bzw. zwei aufeinander folgend berechneten Geschwindigkeitswerten ermittelt werden. Auf diese Weise errechnete Bewegungswerte geben aber immer nur einen Durchschnittswert wieder, mit der der gesteuerte Antrieb den Weg von der ersten zur zweiten und ggf. zur dritten Position zurückgelegt hat.

In der Praxis kann die tatsächliche Geschwindigkeit eines Antriebs zu einem bestimmten Messzeitpunkt erheblich vom Durchschnittswert abweichen. Das kann beispielsweise mechanische Ursachen haben, wie Unwuchten in den Motorwellen, Reibungseffekte oder Lastwechsel, etwa hervorgerufen durch den Eingriff eines Werkzeugs in ein Werkstück. Besonders problematisch sind jedoch Fehler des Positionsmessgeräts, insbesondere Quantisierungsfehler, da diese sich umso stärker auswirken, je kürzer die Reglerzykluszeit und je kleiner die daraus resultierende Differenz zwischen zwei aufeinander folgend gemessenen Positionswerten ist. Wird nun der Durchschnittswert, der ja auf hintereinander gemessenen Positionswerten basiert, zur Ermittlung eines neuen Geschwindigkeitssollwertes verwendet, können aufgrund von der Diskrepanz zwischen der tatsächlichen Geschwindigkeit zum Messzeitpunkt und dem Durchschnittswert unerwünschte Regelschwankungen auftreten, die zu einer Erwärmung des Motors des Antriebs, zu störender Geräuschentwicklung oder auch zu Vibrationen durch Resonanzeffekte führen können.

Moderne Positionsmessgeräte, insbesondere solche, die durch den Einsatz hochintegrierter Signalverarbeitungseinheiten, beispielsweise in Form eines Mikrocontrollers oder entsprechender Strukturen in einem anwenderspezifischen integrierten Baustein (ASIC), in der Lage sind, komplexe Rechenoperationen durchzuführen, können Bewegungswerte, insbesondere Geschwindigkeits- und Beschleunigungswerte häufig bereits selbst mit hoher Genauigkeit ermitteln. Da in diesem Fall jedoch sowohl der aktuelle Positionswert, als auch wenigstens ein Bewegungswert, beispielsweise der Geschwindigkeitswert, vom Positionsmessgerät zur Steuerung übertragen werden muss, reduziert sich bei konstanter Reglerzykluszeit die Zeit, die der Steuerung nach Empfang der aktuellen Istwerte zur Verfügung steht, die nötigen Berechnungen zur Ermittlung der neuen Sollwerte durchzuführen. Aus diesem Grund ist speziell dann, wenn die Datenübertragung über serielle Schnittstellen erfolgt, ist diese Variante häufig nicht einsetzbar, weil eine Erhöhung der Datenübertragungsrate mit einem hohen Aufwand an Material und Kosten verbunden ist.

Es ist daher Aufgabe der Erfindung, ein Positionsmessgerät anzugeben, das eine effiziente Übertragung einer Bewegungsinformation zu einer Folgeelektronik erlaubt.

Diese Aufgabe wird gelöst durch ein Positionsmessgerät nach Anspruch 1. Vorteilhafte Details dieses Positionsmessgerätes ergeben sich aus den von Anspruch 1 abhängigen Ansprüchen.

Es wird ein Positionsmessgerät mit einer Positionsmesseinheit, einer Bewegungsmesseinheit, einer Recheneinheit und einer Schnittstelleneinheit vorgeschlagen, wobei mit der Positionsmesseinheit Positionswerte von zwei relativ zueinander in einer Messrichtung beweglich angeordneten Objekten messbar sind, mit der Bewegungsmesseinheit ein Bewegungswert der zwei relativ zueinander in einer Messrichtung beweglich angeordneten Objekte ermittelbar ist und die Positionswerte und der Bewegungswert der Recheneinheit zugeführt sind, die eine Bewegungsinformation in Form eines Korrekturwertes ermittelt, der geeignet ist, um in einer Folgeelektronik aus einem aktuellen Positionswert, wenigstens einem vorhergehenden Positionswert, einer Reglerzykluszeit, die den zeitlichen Abstand zwischen den Messungen von Positionswerten angibt und dem Korrekturwert den Bewegungswert zu berechnen und die Datenwortbreite des Korrekturwerts wesentlich kleiner als die Datenwortbreite des Bewegungswerts ist.

Weiter ist es Aufgabe der Erfindung, ein Verfahren anzugeben, mit dem eine effiziente Übertragung einer Bewegungsinformation von einem Positionsmessgerät zu einer Folgeelektronik ermöglicht wird.

Diese Aufgabe wird gelöst durch ein Verfahren nach Anspruch 12. Vorteilhafte Details dieses Verfahrens ergeben sich aus den von Anspruch 12 abhängigen Ansprüchen.

Es wird nun ein Verfahren zur Ermittlung eines Korrekturwerts zur Übertragung einer Bewegungsinformation von einem Positionsmessgerät zu einer Folgeelektronik vorgeschlagen, wobei das Positionsmessgerät eine Positionsmesseinheit, eine Bewegungsmesseinheit, eine Recheneinheit und eine Schnittstelleneinheit umfasst und das Verfahren folgende Schritte aufweist:

- messen eines aktuellen Positionswerts von zwei relativ zueinander in einer Messrichtung beweglich angeordneten Objekten in der Positionsmesseinheit,
- ermitteln eines Bewegungswerts der zwei relativ zueinander in einer Messrichtung beweglich angeordneten Objekte in der Bewegungsmesseinheit und
- ermitteln des Korrekturwerts in der Recheneinheit, wobei mit Hilfe des Korrekturwerts in der Folgeelektronik aus dem aktuellen Positionswert, wenigstens einem in einem vorhergehenden Messzyklus gemessenen vorhergehenden Positionswert und einer Reglerzykluszeit, die den zeitlichen Abstand zwischen den Messungen von Positionswerten angibt, der Bewegungswert berechnet werden kann und die Datenwortbreite des Korrekturwerts wesentlich kleiner ist als die Datenwortbreite des Bewegungswerts.

Weitere Vorteile sowie Einzelheiten der vorliegenden Erfindung ergeben sich aus der nachfolgenden Beschreibung anhand der Figuren. Dabei zeigt

Figur 1 ein Blockdiagramm eines erfindungsgemäßen Positionsmessgeräts,
Figur 2a ein Zeitdiagramm für die Übertragung von Positionswerten entsprechend dem Stand der Technik,
Figur 2b ein Zeitdiagramm für die Übertragung von Positions- und Bewegungswerten entsprechend dem Stand der Technik,
Figur 2c ein Zeitdiagramm einer erfindungsgemäßen Übertragung von Positions- und Korrekturwerten und
Figur 3 ein Beispiel für einen Positionsverlauf in einer Messrichtung X in Abhängigkeit von der Zeit t.

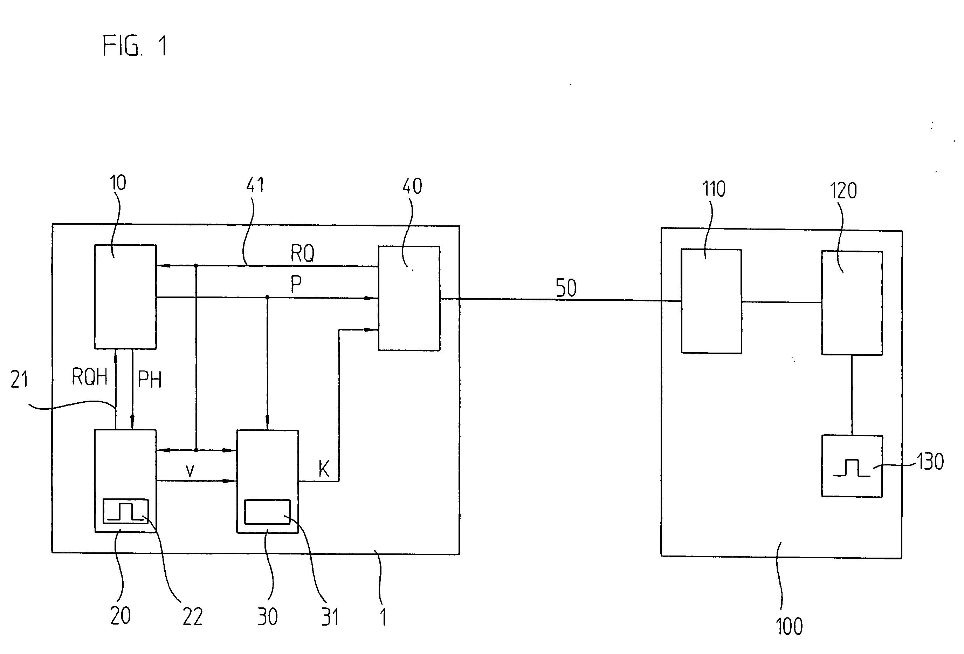

Figur 1 zeigt ein Blockdiagramm eines erfindungsgemäßen Positionsmessgeräts 1. Es umfasst eine Positionsmesseinheit 10 zur Messung von Positionswerten von zwei relativ in einer Messrichtung beweglich zueinander angeordneten Objekten, eine Bewegungsmesseinheit 20 für die Ermittlung von Bewegungswerten der zwei Objekte, eine Recheneinheit 30 zur Ermittlung von Korrekturwerten aus Positionswerten und Bewegungswerten, sowie eine Schnittstelleneinheit 40. Ein Datenkanal 50 verbindet die Schnittstelleneinheit 40 des Positionsmessgeräts 1 mit einer Schnittstelleneinheit 110 einer Folgeelektronik 100, beispielsweise einer Antriebssteuerung 100. Die Antriebssteuerung 100 umfasst weiter eine Reglereinheit 120, deren Reglerzykluszeit $T_R$ von einem Reglertaktgenerator 130 bestimmt ist.

Im vorliegenden Beispiel handelt es sich bei der Bewegungsmesseinheit 20 um eine Geschwindigkeitsmesseinheit 20 mit der Geschwindigkeitswerte v der zwei relativ in einer Messrichtung beweglich zueinander angeordneten Objekte messbar sind. Es sei an dieser Stelle ausdrücklich darauf hingewiesen, dass die vorliegende Erfindung auch für andere Bewegungswerte, insbesondere Beschleunigungswerte anwendbar ist.

Die zwei relativ in einer Messrichtung beweglich zueinander angeordneten Objekte können beispielsweise Rotor und Stator eines Elektromotors sein, oder ein Werkzeugschlitten, der beweglich auf einem Maschinentisch einer Werkzeugmaschine angeordnet ist. Im ersten Fall handelt es sich bei den Positions- und Geschwindigkeitswerten um Winkelpositionen und -geschwindigkeiten, während im zweiten Fall lineare Positionen und Geschwindigkeiten gemessen werden.

Der Datenkanal 50 und die Schnittstelleneinheiten 40, 110 des Positionsmessgeräts 1 bzw. der Antriebssteuerung 100 sind so ausgestaltet, dass über sie eine bidirektionale Datenübertragung ermöglicht wird. Insbesondere können von der Antriebssteuerung 100 Datenanforderungsbefehle RQ zum Positionsmessgerät 1 und im Positionsmessgerät 1 ermittelte Daten zur Antriebssteuerung 100 gesendet werden. Mit Vorteil wird als Datenkanal 50 eine serielle Schnittstellenverbindung eingesetzt, da in diesem Fall die Anzahl der benötigten Leitungen für die Datenübertragung gering ist und damit der Verdrahtungsaufwand reduziert werden kann. Im laufenden Betrieb der Antriebssteuerung 100, d.h. wenn beispielsweise der Motor einer Vorschubachse einer Werkzeugmaschine oder eines Robotergelenks angesteuert wird, erfolgt die Übertragung von Datenanforderungsbefehlen RQ kontinuierlich im zeitlichen Abstand der Reglerzykluszeit $T_R$. Typische Reglerzykluszeiten $T_R$ sind beispielsweise 50us bis 2 ms.

Die Datenanforderungsbefehle RQ werden im Positionsmessgerät 1 von der Schnittstelleneinheit 40 über eine Datenanforderungsleitung 41 an die Positionsmesseinheit 10, die Geschwindigkeitsmesseinheit 20 und die Recheneinheit 30 weitergeleitet. Erreicht ein Datenanforderungsbefehl RQ die Positionsmesseinheit 10, so ermittelt diese einen aktuellen Positionswert $P_n$ und überträgt ihn zur Schnittstelleneinheit 40 und zur Recheneinheit 30. Ebenso ermittelt die Geschwindigkeitsmesseinheit 20 nach Empfang eines Datenanforderungsbefehls RQ einen aktuellen Geschwindigkeitswert v und übermittelt diesen zur Recheneinheit 30. In der Recheneinheit 30 ist nun aus dem aktuellen Positionswert $P_n$, dem vorhergehenden Positionswert $P_{n-1}$ und der bekannten Reglerzykluszeit $T_R$ mit

$$v_D = (P_n - P_{n-1}) / T_R \qquad\qquad \text{(Gleichung 1)}$$

die Durchschnittsgeschwindigkeit $v_D$ ermittelbar, die der gesteuerte Antrieb auf der Strecke vom vorhergehenden Positionswert $P_{n-1}$ zum aktuellen Positionswert $P_n$ aufgewiesen hat. Der Wert der Durchschnittsgeschwindigkeit $v_D$ ist fehlerbehaftet, da zum einen der tatsächliche Geschwindigkeitsverlauf nicht berücksichtigt ist und damit der tatsächliche Geschwindigkeitswert v zum gewünschten Messzeitpunkt, im vorliegenden Beispiel zum Zeitpunkt des Eintreffens des Datenanforderungsbefehls RQ, von der Durchschnittsgeschwindigkeit $v_D$ abweichen kann, und zum andern Fehler in den Positionswerten $P_n$, $P_{n-1}$, insbesondere Quantisierungsfehler, in die Rechnung mit eingehen.

Die Werte für die Reglerzykluszeit $T_R$ und den vorhergehenden Positionswert $P_{n-1}$ können beispielsweise in der Recheneinheit 30 in einem Speicher 31 abgelegt sein. In einer bevorzugten Ausführungsform kann die Reglerzykluszeit $T_R$ von der Antriebssteuerung 100 über den Datenkanal 50 in den Speicher 31 geschrieben werden. In diesem Fall kann das Positionsmessgerät 1 sehr einfach an verschiedene Antriebssteuerungen 100 mit verschiedenen Reglerzykluszeiten $T_R$ angepasst werden.

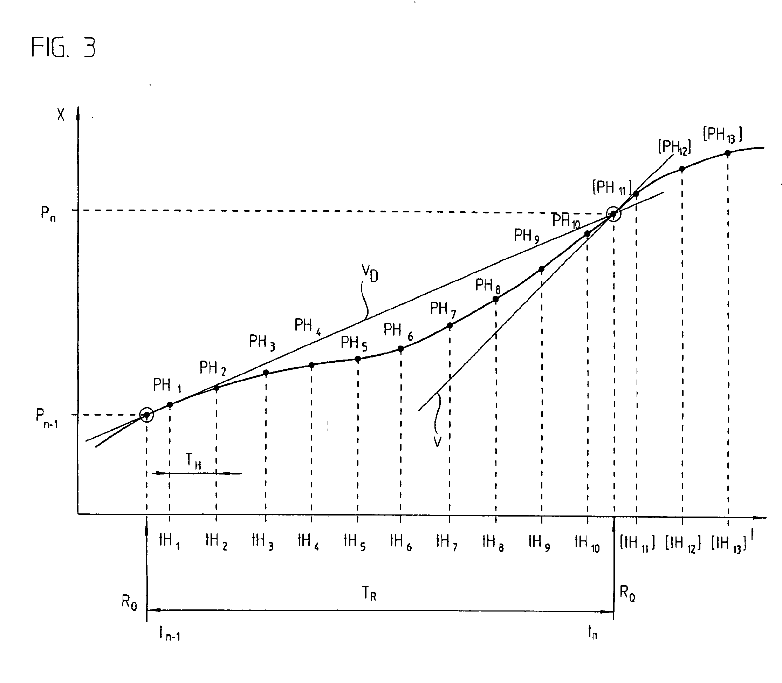

In einer weiteren vorteilhaften Ausgestaltung ist die Reglerzykluszeit $T_R$ in der Recheneinheit 30 messbar, damit können beispielsweise auch variable Reglerzykluszeiten $T_R$ berücksichtigt werden. Die Messung der Reglerzykluszeit $T_R$ kann beispielsweise mittels eines Zählers erfolgen, der mit einem Taktsignal betrieben wird, das eine wesentlich kürzere Periodendauer als die Reglerzykluszeit $T_R$ aufweist. Aus der Differenz des Zählerstands zwischen zwei Datenanforderungsbefehlen RQ und der Periodendauer des Taktsignals kann die Reglerzykluszeit $T_R$ berechnet werden. Als Taktsignal zum Betrieb des Zählers kann beispielsweise das in der Beschreibung der Figur 3 beschriebene Abtasttaktsignal der Geschwindigkeitsmesseinheit 20 verwendet werden.

Der aktuelle Positionswert $P_n$, der vorhergehende Positionswert $P_{n-1}$ und die Reglerzykluszeit $T_R$ stehen auch der Antriebssteuerung 100 zur Verfügung. Deshalb kann, wie einleitend beschrieben, der Wert der Durchschnittsgeschwindigkeit $v_D$ auch in der Antriebssteuerung 100 bestimmt werden. Da die so ermittelte Durchschnittsgeschwindigkeit $v_D$, wie ebenfalls einleitend beschrieben, in der Praxis von der tatsächlichen Geschwindigkeit des Antriebs zum Zeitpunkt der Abfrage abweichen kann, eine Übertragung des aktuellen Geschwindigkeitswertes v aufgrund von der damit verbundenen erhöhten Übertragungszeitdauer aber unerwünscht ist, ermittelt die Recheneinheit 30 aus der Durchschnittsgeschwindigkeit $v_D$ und dem aktuellen, in der Geschwindigkeitsmesseinheit 20 ermittelten Geschwindigkeitswert v einen Korrekturwert K, mit dessen Hilfe in der Antriebssteuerung 100 unter Verwendung des aktuellen Positionswerts $P_n$, des vorhergehenden Positionswerts $P_{n-1}$ und der Reglerzykluszeit $T_R$ der aktuelle Geschwindigkeitswert v ermittelbar ist. Der Korrekturwert K weist eine wesentlich kleinere Datenwortbreite als der aktuelle Geschwindigkeitswert v auf. Dadurch wird eine Übertragung der Information über den aktuellen Geschwindigkeitswert v bei moderater Erhöhung der Übertragungszeitdauer ermöglicht.

Die Datenwortbreite des Geschwindigkeitswerts v ist von mehreren Faktoren abhängig, unter anderem von der Datenwortbreite und damit der Auflösung der Positionsmesseinheit 10, der maximal zugelassenen Geschwindigkeit, d.h. der maximalen Drehzahl eines rotatorischen Positionsmessgeräts oder der maximalen Vorschubgeschwindigkeit eines linearen Positionsmessgeräts, sowie von der geforderten Auflösung des Geschwindigkeitswerts v. In der Praxis ist für typische Anwendungen die Datenwortbreite des Geschwindigkeitswerts v im Bereich der Datenwortbreite des aktuellen Positionswerts $P_n$ anzusetzen, die beispielsweise 20 Bit betragen kann.

In weiterer Ausgestaltung der Erfindung ist es sogar möglich, dass der im Positionsmessgerät 1 ermittelte Geschwindigkeitswert v eine höhere Auflösung aufweist, als die nach Gleichung 1 berechnete Durchschnittsgeschwindigkeit $v_D$. Der zur Antriebssteuerung 100 übertragene Korrekturwert K erlaubt es nun, die Geschwindigkeitsinformation mit einer höheren Auflösung zu übertragen ohne das Datenvolumen signifikant zu erhöhen.

Beim Korrekturwert K für die Übertragung der Geschwindigkeitsinformation kann es sich sowohl um einen Positionskorrekturwert $K_P$, einen Bewegungskorrekturwert $K_V$ (im vorliegenden Beispiel einen Geschwindigkeitskorrekturwert $K_V$), als auch einen Zeitkorrekturwert $K_T$ handeln. Ein Positionskorrekturwert $K_P$ errechnet sich beispielsweise aus

$$K_P = (v_D - v) * T_R \qquad\qquad \text{(Gleichung 2)}$$

Somit errechnet sich der Geschwindigkeitswert v in der Antriebssteuerung 100 mit der Gleichung

$$v = ((P_n - P_{n-1}) + K_P) / T_R \qquad\qquad \text{(Gleichung 3)}$$

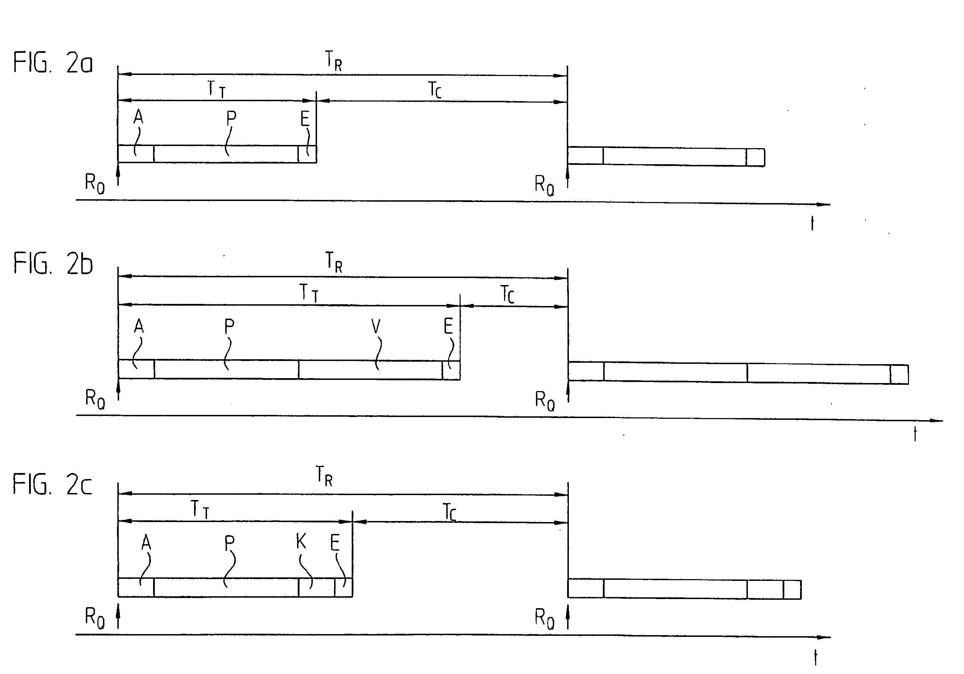

Die Figuren 2a bis 2c verdeutlichen den zeitlichen Vorteil bei der Übertragung einer Bewegungsinformation am Beispiel der Geschwindigkeitsinformation mit einem erfindungsgemäßen Positionsmessgerät 1 gegenüber den im Stand der Technik bekannten Verfahren. Dabei zeigt Figur 2a die bekannte Variante, bei der lediglich der Positionswert P übertragen wird und die Geschwindigkeit in der Folgeelektronik durch Berechnung der Durchschnittsgeschwindigkeit $v_D$ ermittelt wird, während in Figur 2b sowohl der Positionswert P, als auch der Geschwindigkeitswert v übertragen wird, was eine massive Erhöhung der Übertragungszeit zur Folge hat. Figur 2c zeigt schließlich die erfindungsgemäße Übertragung von Positionswert P und Korrekturwert K.

Die Übertragung der angeforderten Daten kann beispielsweise in Form von Datenpaketen erfolgen, die jeweils mit einer Anfangssequenz A beginnen und mit einer Endsequenz E abgeschlossen werden. Dabei kann es sich bei der Anfangssequenz A im einfachsten Fall lediglich um ein Startbit handeln, es können aber auch Identifikationsinformationen, etc. übertragen werden. Ebenso kann die Endsequenz E nur aus einem Stopbit bestehen, oder Zusatzinformationen, beispielsweise eine Prüfsumme zur Gewährleistung der Datensicherheit (CRC, cyclic redundancy check) enthalten.

Die Übertragung der Datenpakete erfolgt als Reaktion auf den Empfang eines Datenanforderungsbefehls RQ, der in den Figuren 2a bis 2c lediglich stark vereinfacht als Pfeil angedeutet ist. Der zeitliche Abstand zweier aufeinander folgender Datenanforderungsbefehle RQ entspricht der Reglerzykluszeit $T_R$. Es sei der Vollständigkeit halber darauf hingewiesen, dass der Datenanforderungsbefehl RQ ebenfalls als Teil eines Datenpakets gesendet werden kann und dass in der Praxis zwischen der Ankunft des Datenanforderungsbefehls RQ und dem Senden der angeforderten Daten eine gewisse Zeit für die Verarbeitung der Daten im Positionsmessgerät 1 vergehen kann. Da dies jedoch für die Figuren 2a bis 2c gleichermaßen zutrifft und für die vorliegende Erfindung nicht relevant ist, wird auf eine ausführliche Beschreibung verzichtet.

In Figur 2a besteht das Datenpaket aus Anfangssequenz A, Positionswert P und Endsequenz E. Die zur Übertragung des Datenpakets vom Positionsmessgerät 1 zur Antriebssteuerung 100 notwendige Übertragungszeitdauer $T_T$ ist sehr kurz, was zur Folge hat, dass die Rechenzeit $T_C$, die der Antriebssteuerung 100 für die Berechnung der neuen Sollwerte für die Regelkreise zur Ansteuerung des dem Positionsmessgerät 1 zugeordneten Antriebs zur Verfügung steht, recht lang ist. Da in diesem Fall aber, wie bereits ausführlich erörtert, die Antriebssteuerung 100 darauf angewiesen ist, als Istwert für die Geschwindigkeit die Durchschnittsgeschwindigkeit $v_D$ zwischen zwei aufeinander folgenden Positionswerten P zu verwenden, ist diese Variante in der Praxis recht ungenau.

In Figur 2b enthält das Datenpaket dagegen neben der Anfangssequenz A, dem Positionswert P und der Endsequenz E noch den im Positionsmessgerät 1 ermittelten Geschwindigkeitswert v. Der Antriebssteuerung 100 steht somit der genaue Geschwindigkeitswert v für die Berechnung der neuen Sollwerte zur Verfügung. Da sich die Datenwortbreite des Geschwindigkeitswerts v im Bereich der Datenwortbreite des Positionswerts P befindet, führt diese Variante zu einer wesentlich längeren Übertragungszeitdauer $T_T$, bzw. zu einer Verkürzung der Rechenzeit $T_C$, die der Antriebssteuerung 100 zur Verfügung steht. Das kann dazu führen, dass bei der Berechnung der neuen Istwerte für die Regelung Kompromisse in Bezug auf die Rechengenauigkeit eingegangen werden müssen, oder die Reglerzykluszeit $T_R$ erhöht werden muss. Beides verschlechtert die Dynamik der Antriebsregelung und ist deshalb unerwünscht.

Figur 2c zeigt nun ein Datenpaket, das aus Anfangssequenz A, Positionswert P, Korrekturwert K und Endsequenz E besteht. Da die Datenwortbreite des Korrekturwerts K zur Berechnung des Geschwindigkeitswerts v aus Positionswerten P, der Reglerzykluszeit $T_R$ und dem Korrekturwert K in der Antriebssteuerung 100 wesentlich kleiner als die Datenwortbreite des Geschwindigkeitswerts v gewählt werden kann, führt diese Variante nur zu einer unwesentlichen Erhöhung der Übertragungszeitdauer $T_T$ und somit zu einer unwesentlichen Reduzierung der Rechenzeit $T_C$.

Für die Ermittlung des Geschwindigkeitswerts v in der Geschwindigkeitsmesseinheit 20 können verschiedene Messprinzipien zum Einsatz kommen. Besonders vorteilhaft ist es jedoch; wenn die Geschwindigkeitsmesseinheit 20 die Positionsmesseinheit 10 dazu verwendet, durch Messung von Hilfspositionswerten PH den tatsächlichen Verlauf der Position in Abhängigkeit von der Zeit zu erfassen. Zu diesem Zweck umfasst die Geschwindigkeitsmesseinheit 20 in Figur 1 weiter einen Abtasttaktgenerator 22, der ein Abtasttaktsignal mit einer Periodendauer $T_H$ erzeugt, das die Zeitabstände bestimmt, in denen Hilfspositionswerte PH von der Positionsmesseinheit 10 angefordert werden. Die Anforderung von Hilfspositionswerten PH erfolgt mit Hilfe von Hilfsdatenanforderungsbefehlen RQH, die über eine Hilfspositionsanforderungsleitung 21 zur Positionsmesseinheit 10 geschickt werden.

Aus je zwei sequentiell gemessenen Hilfspositionswerten PH und der bekannten Periodendauer $T_H$ des Abtasttaktsignals können nun, analog zur Berechnung der Durchschnittsgeschwindigkeit $v_D$, Hilfsdurchschnittsgeschwindigkeiten errechnet werden, mit deren Hilfe durch geeignete Extrapolations- oder Interpolationsalgorithmen, wie z.B. Spline- oder Polynominterpolation oder sonstigen Filterfunktionen, eine Näherungsfunktion an den tatsächlichen Geschwindigkeitsverlauf gebildet und daraus wiederum der Geschwindigkeitswert v zu einem gewünschten Zeitpunkt ermittelt werden kann.

Dabei ist es vorteilhaft, wenn der Abtasttakt wenigstens die doppelte Frequenz wie der Reglertakt aufweist, das bedeutet, dass je gemessenem Positionswert $P_n$, $P_{n-1}$ wenigstens zwei Hilfspositionswerte PH generiert werden. Da die Genauigkeit der Annäherung an den tatsächlichen Geschwindigkeitsverlauf mit der Anzahl der ermittelten Hilfsdurchschnittsgeschwindigkeiten, bzw. der Anzahl der gemessenen Hilfspositionswerte PH steigt, ist eine möglichst hohe Frequenz des Abtasttaktsignals anzustreben. Dem steht eine begrenzte Verarbeitungsgeschwindigkeit der Positionsmesseinheit 10, der Geschwindigkeitsmesseinheit 20 und der Recheneinheit 30 gegenüber. Bei Versuchen hat sich gezeigt, dass bereits sehr gute Ergebnisse erzielt werden können, wenn als Frequenz für das Abtasttaktsignal die vierbis zweiunddreißigfache Frequenz des Reglertaktsignals gewählt wird.

In weiterer Ausgestaltung kann mit Hilfe des durch die Hilfsdurchschnittsgeschwindigkeiten festgelegten Geschwindigkeitsverlaufs auch ein Beschleunigungswert a ermittelt werden, d.h. die Geschwindigkeitsmesseinheit 20 kann auf einfache Weise zu einer Beschleunigungsmesseinheit 20 weiter entwickelt werden.

Figur 3 zeigt ein Beispiel für einen Positionsverlauf in einer Messrichtung X in Abhängigkeit von der Zeit t.

Der Zeitpunkt $t_{n-1}$ kennzeichnet den Zeitpunkt, zu dem im vorhergehenden Messzyklus der vorhergehende Positionswert $P_{n-1}$ gemessen wurde. Zum Zeitpunkt $t_n$ wird im aktuellen Messzyklus als Folge des Eintreffens eines Datenanforderungsbefehls RQ von der Antriebssteuerung 100 der aktuelle Positionswert $P_n$ gemessen. Der zeitliche Abstand zwischen den Zeitpunkten $t_{n-1}$ und $t_n$ entspricht der Reglerzykluszeit $T_R$. Aus dem vorhergehenden Positionswert $P_{n-1}$, dem aktuellen Positionswert $P_n$ und der bekannten Reglerzykluszeit $T_R$ errechnet sich die Durchschnittsgeschwindigkeit $v_D$ wie in Gleichung 1 angegeben. Der so ermittelte Wert entspricht der Steigung der Geraden $v_D$. Der tatsächliche Geschwindigkeitswert v, beispielsweise zum Zeitpunkt $t_n$, entspricht jedoch der Steigung der Geraden v, die eine Tangente am tatsächlichen Positionsverlauf an der Position des aktuellen Positionswerts $P_n$ darstellt.

Die Geschwindigkeitsmesseinheit 20 fordert von der Positionsmesseinheit 10 zu Hilfszeitpunkten $tH_1$ bis $tH_{10}$ in zeitlichen Abständen der Periodendauer TH des Abtasttaktsignals Hilfspositionswerte $PH_1$ bis $PH_{10}$ an. In diesem Beispiel entspricht die Frequenz des Abtasttaktes $f_H=1/T_H$ der 10fachen Frequenz des Reglertaktes $f_R=1/T_R$. Zu einem definierten Zeitpunkt, beispielsweise bei Ankunft eines Datenanforderungsbefehls RQ wird nun der Geschwindigkeitswert v gebildet.

Da das Abtasttaktsignal und das Reglertaktsignal von verschiedenen Taktquellen, zum einen dem Abtasttaktgenerator 22 im Positionsmessgerät 1, zum anderen dem Reglertaktgenerator 130 in der Antriebssteuerung 100 erzeugt werden, ist es, um Schwebungseffekte zu vermeiden, besonders vorteilhaft, wenn die Taktsignale synchronisiert werden können. Zur Synchronisation können im Positionsmessgerät 1 beispielsweise die Zeitpunkte $t_n$, $t_{n-1}$ verwendet werden, zu denen Datenanforderungsbefehle RQ von der Antriebssteuerung 100 eintreffen. Weist das Abtasttaktsignal ein ganzzahliges Vielfaches der Frequenz des Reglertaktsignals auf, so ergibt sich weiter der Vorteil, dass der Messzeitpunkt $t_n$ weitgehend mit einem der Messzeitpunkte der Hilfspositionswerte PH zusammenfällt und damit der entsprechende Hilfspositionswert PH mit dem aktuellen Positionswert $P_n$ gleichgesetzt werden kann.

In weiterer Ausgestaltung können zur Ermittlung des Geschwindigkeitswerts v auch Hilfspositionswerte PH verwendet werden, die nach der Ankunft des Datenanforderungsbefehls RQ gemessen werden. Dies ist in Figur 3 mit den Hilfspositionswerten $PH_{11}$ bis $PH_{13}$ angedeutet, die nach dem zum Zeitpunkt $t_n$ eintreffenden Datenanforderungsbefehl RQ zu Hilfszeitpunkten $tH_{11}$ bis $tH_{13}$ gemessen werden. Das ist insbesondere dann vorteilhaft anwendbar, wenn auf einen Datenanforderungsbefehl RQ zuerst der aktuelle Positionswert $P_n$ und anschließend der Korrekturwert K zur Antriebssteuerung 100 übertragen wird, da die Zeit, die für die Übertragung des aktuellen Positionswerts $P_n$ benötigt wird, zur Messung weiterer Hilfspositionswerte PH und zur Ermittlung des Geschwindigkeitswerts v, bzw. des Korrekturwerts K verwendet werden kann. Auf diese Weise kann zum einen eine Geschwindigkeitsinformation zur Antriebssteuerung 100 übertragen werden, die der Geschwindigkeit des Antriebs eine definierte Zeit nach Eintreffen des Datenanforderungsbefehls RQ entspricht. Dadurch steht der Antriebssteuerung 100 ein noch aktuellerer Geschwindigkeitswert v als Istwert zur Verfügung. Zum anderen besteht in diesem Fall die Möglichkeit, den Geschwindigkeitswert v zu einem Zeitpunkt, der vor dem der Messung des letzten Hilfspositionswertes $PH_{13}$ liegt, durch Interpolation zu ermitteln. Dadurch ist eine höhere Genauigkeit für den Geschwindigkeitswert v erreichbar, als durch Extrapolation, die dann angewendet werden muss, wenn der letzte Hilfspositionswert $PH_{13}$ vor dem Zeitpunkt der Ermittlung des Geschwindigkeitswerts v gemessen wird.

Bei der Positionsmesseinheit 10 kann es sich sowohl um ein inkrementales, als auch um ein absolutes System handeln. Ebenso ist das physikalische Abtastprinzip, das der Positionsmesseinheit 10 zugrunde liegt, für die vorliegende Erfindung nicht relevant. So kann die Positionsmesseinheit 10 beispielsweise auf einem optischen, magnetischen, induktiven oder kapazitiven Messprinzip basieren.

Die Aufteilung des Positionsmessgeräts 1 in die Funktionsblöcke Positionsmesseinheit 10, Geschwindigkeitsmesseinheit 20, Recheneinheit 30 und Schnittstelleneinheit 40 wurde lediglich zum besseren Verständnis vorgenommen. In der Praxis können mehrere, oder auch alle Funktionsblöcke in einem hochintegrierten anwenderspezifischen Baustein (ASIC) integriert sein. Ebenso kann für die Realisierung wenigstens eines Teils der Funktionsblöcke ein Mikrocontroller eingesetzt werden.

## Patentansprüche

1. Pösitionsmessgerät mit einer Positionsmesseinheit (10), einer Bewegungsmesseinheit (20), einer Recheneinheit (30) und einer Schnittstelleneinheit (40), wobei

   - mit der Positionsmesseinheit (10) Positionswerte (P; $P_n$, $P_{n-1}$) von zwei relativ zueinander in einer Messrichtung beweglich angeordneten Objekten messbar sind,
   - mit der Bewegungsmesseinheit (20) ein Bewegungswert (v) der zwei relativ zueinander in einer Messrichtung beweglich angeordneten Objekte ermittelbar ist,
   - die Positionswerte (P; $P_n$, $P_{n-1}$) und der Bewegungswert (v) der Recheneinheit (30) zugeführt sind, die eine Bewegungsinformation in Form eines Korrekturwertes (K) ermittelt, der geeignet ist, um in einer Folgeelektronik (100) aus einem aktuellen Positionswert ($P_n$), wenigstens einem vorhergehenden Positionswert ($P_{n-1}$), einer Reglerzykluszeit ($T_R$), die den zeitlichen Abstand zwischen den Messungen von Positionswerten (P; $P_n$, $P_{n-1}$) angibt und dem Korrekturwert (K) den Bewegungswert (v) zu berechnen und die Datenwortbreite des Korrekturwerts (K) wesentlich kleiner als die Datenwortbreite des Bewegungswerts (v) ist.

2. Positionsmessgerät nach Anspruch 1, wobei die Schnittstelleneinheit (40) über eine Datenanforderungsleitung (41) mit der Positionsmesseinheit (10), der Bewegungsmesseinheit (20) und der Recheneinheit (30) verbunden ist, über die Datenanforderungsbefehle (RQ), die von der Folgeelektronik (100) bei der Schnittstelleneinheit (40) eintreffen, übertragbar sind.

3. Positionsmessgerät nach Anspruch 2, wobei die Datenanforderungsbefehle (RQ) im zeitlichen Abstand der Reglerzykluszeit ($T_R$) bei der Schnittstelleneinheit (40) eintreffen.

4. Positionsmessgerät nach Anspruch 1, wobei der aktuelle Positionswert ($P_n$) und der Korrekturwert (K) der Schnittstelleneinheit (40) zugeführt sind und von der Schnittstelleneinheit (40) zur Folgeelektronik (100) übertragbar sind.

5. Positionsmessgerät nach einem der vorhergehenden Ansprüche, wobei der Korrekturwert (K) ein Positionskorrekturwert ($K_P$) oder ein Bewegungskorrekturwert ($K_V$) oder ein Zeitkorrekturwert ($K_T$) ist.

6. Positionsmessgerät nach einem der vorhergehenden Ansprüche, wobei die Recheneinheit (30) weiter einen Speicher (31) umfasst, in dem die Reglerzykluszeit ($T_R$) und/oder Positionswerte (P; $P_n$, $P_{n-1}$) speicherbar sind.

7. Positionsmessgerät nach einem der vorhergehenden Ansprüche, wobei die Schnittstelleneinheit (40) über einen Datenkanal (50) mit einer Schnittstelleneinheit (110) der Folgeelektronik (100) verbunden ist.

8. Positionsmessgerät nach einem der vorhergehenden Ansprüche, wobei Datenkanal (50) eine serielle Schnittstellenverbindung ist.

9. Positionsmessgerät nach einem der vorhergehenden Ansprüche, wobei die Bewegungsmesseinheit (20) einen Abtasttaktgenerator (22) umfasst, der ein Abtasttaktsignal mit einer Periodendauer ($T_H$) erzeugt und die Bewegungsmesseinheit (20) über eine Hilfsdatenanforderungsleitung (21) mit der Positionsmesseinheit (10) verbunden ist, über die mit Hilfe von Hilfspositionsanforderungsbefehlen (RQH) Hilfspositionswerte (PH; $PH_1$ bis $PH_{13}$) von der Positionsmesseinheit (10) anforderbar sind.

10. Positionsmessgerät nach Anspruch 9, wobei die Anforderung von Hilfspositionswerten (PH; $PH_1$ bis $PH_{13}$) im zeitlichen Abstand der Periodendauer ($T_H$) des Abtasttaktsignals erfolgt und die Hilfspositionswerte (PH; $PH_1$ bis $PH_{13}$) der Bewegungsmesseinheit (20) zugeführt sind, in der der Bewegungswert (v) zu einem Messzeitpunkt ($t_n$) durch

Bildung einer Näherungsfunktion an den Bewegungsverlauf aus den Hilfspositionswerten (PH; $PH_1$ bis $PH_{13}$) und der Periodendauer ($T_H$) des Abtasttaktsignals ermittelbar ist.

11. Positionsmessgerät nach einem der vorhergehenden Ansprüche, wobei die Bewegungsmesseinheit (20) eine Geschwindigkeitsmesseinheit (20) und der Bewegungswert (v) ein Geschwindigkeitswert (v) ist.

12. Verfahren zur Ermittlung eines Korrekturwerts (K) zur Übertragung einer Bewegungsinformation von einem Positionsmessgerät (1) zu einer Folgeelektronik (100), wobei das Positionsmessgerät (1) eine Positionsmesseinheit (10), eine Bewegungsmesseinheit (20), eine Recheneinheit (30) und eine Schnittstelleneinheit (40) umfasst, mit folgenden Schritten:

   - messen eines aktuellen Positionswerts ($P_n$) von zwei relativ zueinander in einer Messrichtung beweglich angeordneten Objekten in der Positionsmesseinheit (10),
   - ermitteln eines Bewegungswerts (v) der zwei relativ zueinander in einer Messrichtung beweglich angeordneten Objekte in der Bewegungsmesseinheit (20) und
   - ermitteln des Korrekturwerts (K) in der Recheneinheit (30), wobei mit Hilfe des Korrekturwerts (K) in der Folgeelektronik (100) aus dem aktuellen Positionswert ($P_n$), wenigstens einem in einem vorhergehenden Messzyklus gemessenen vorhergehenden Positionswert ($P_{n-1}$) und einer Reglerzykluszeit ($T_R$), die den zeitlichen Abstand zwischen den Messungen von Positionswerten (P; $P_n$, $P_{n-1}$) angibt, der Bewegungswert (v) berechnet werden kann und die Datenwortbreite des Korrekturwerts (K) wesentlich kleiner ist als die Datenwortbreite des Bewegungswerts (v).

13. Verfahren nach Anspruch 12, wobei die Ermittlung des aktuellen Positionswerts ($P_n$), des Bewegungswerts (v) und des Korrekturwerts (K) nach empfang eines Datenanforderungsbefehls (RQ) erfolgt, der von der Folgeelektronik (100) zur Schnittstelleneinheit (40) des Positionsmessgerätes (1) gesendet wird.

14. Verfahren nach einem der Ansprüche 12 oder 13, wobei der aktuelle Positionswert ($P_n$) und der Korrekturwert (K) über die Schnittstelleneinheit (40) zur Folgeelektronik (100) übertragen werden.

15. Verfahren nach einem der Ansprüche 12 bis 14, wobei der Korrekturwert (K) ein Positionskorrekturwert ($K_P$) oder ein Bewegungskorrekturwert ($K_V$) oder ein Zeitkorrekturwert ($K_T$) ist.

16. Verfahren nach einem der Ansprüche 12 bis 15, wobei die Bewegungsmesseinheit (20) weiter einen Abtasttaktgenerator (22) umfasst, der ein Abtasttaktsignal mit einer Periodendauer ($T_H$) erzeugt und die Bewegungsmesseinheit (20) über eine Hilfsdatenanforderungsleitung (21) mit der Positionsmesseinheit (10) verbunden ist, über die mit Hilfe von Hilfspositionsanforderungsbefehlen (RQH) Hilfspositionswerte (PH; $PH_1$ bis $PH_{13}$) von der Positionsmesseinheit (10) anforderbar sind und die Ermittlung des Bewegungswerts (v) folgende Schritte umfasst:

   - anfordern von Hilfspositionswerten (PH; $PH_1$ bis $PH_{13}$) im zeitlichen Abstand der Periodendauer ($T_H$) des Abtasttaktsignals,
   - bilden von Hilfsbewegungswerten aus den Hilfspositionswerten (PH; $PH_1$ bis $PH_{13}$) und der Periodendauer ($T_H$) des Abtasttaktsignals,
   - bilden einer Näherungsfunktion des Bewegungsverlaufs aus den Hilfsbewegungswerten und
   - ermitteln des Bewegungswerts (v) zu einem Messzeitpunkt ($t_n$) aus der Näherungsfunktion.

17. Verfahren nach einem der Ansprüche 12 bis 16, wobei die Bewegungsmesseinheit (20) eine Geschwindigkeitsmesseinheit (20) ist, die als Bewegungswert (v) einen Geschwindigkeitswerts (v) ermittelt.

**Claims**

1. Position measuring appliance having a position measuring unit (10), a movement measuring unit (20), a computation unit (30) and an interface unit (40), wherein

   - the position measuring unit (10) can be used to measure position values (P; $P_n$; $P_{n-1}$) for two objects which are arranged so as to be able to move relative to one another in a direction of measurement,
   - the movement measuring unit (20) can be used to ascertain a movement value (v) for the two objects arranged so as to be able to move relative to one another in a direction of measurement,

- the position values (P; $P_n$; $P_{n-1}$) and the movement value (v) are supplied to the computation unit (30), which ascertains a piece of movement information in the form of a correction value (K) which is suitable for calculating the movement value (v) in downstream electronics (100) from a present position value ($P_n$), at least one preceding position value ($P_{n-1}$), a controller cycle time ($T_R$), which indicates the interval of time between the measurements for position values (P; $P_n$; $P_{n-1}$), and the correction value (K), and the data word length of the correction value (K) is substantially shorter than the data word length of the movement value (v).

2. Position measuring appliance according to Claim 1, wherein the interface unit (40) is connected to the position measuring unit (10), the movement measuring unit (20) and the computation unit (30) by means of a data request line (41), which can be used to transmit data request commands (RQ) which arrive on the interface unit (40) from the downstream electronics (100).

3. Position measuring appliance according to Claim 2, wherein the data request commands (RQ) arrive on the interface unit (40) at the interval of time of the controller cycle time ($T_R$).

4. Position measuring appliance according to Claim 1, wherein the present position value ($P_n$) and the correction value (K) are supplied to the interface unit (40) and can be transmitted from the interface unit (40) to the downstream electronics (100).

5. Position measuring appliance according to one of the preceding claims, wherein the correction value (K) is a position correction value ($K_P$) or a movement correction value ($K_V$) or a time correction value ($K_T$).

6. Position measuring appliance according to one of the preceding claims, wherein the computation unit (30) also comprises a memory (31) which can be used to store the controller cycle time ($T_R$) and/or position values (P; $P_n$; $P_{n-1}$).

7. Position measuring appliance according to one of the preceding claims, wherein the interface unit (40) is connected by means of a data channel (50) to an interface unit (110) of the downstream electronics (100).

8. Position measuring appliance according to one of the preceding claims, wherein the data channel (50) is a serial interface connection.

9. Position measuring appliance according to one of the preceding claims, wherein the movement measuring unit (20) comprises a sampling clock generator (22) which produces a sampling clock signal having a period duration ($T_H$), and the movement measuring unit (20) is connected to the position measuring unit (10) by means of an auxiliary data request line (21), which can be used to request auxiliary position values (PH; $PH_1$ to $PH_{13}$) from the position measuring unit (10) by using auxiliary position request commands (RQH).

10. Position measuring appliance according to Claim 9, wherein auxiliary position values (PH; $PH_1$ to $PH_{13}$) are requested at the interval of time of the period duration ($T_H$) of the sampling clock signal, and the auxiliary position values (PH; $PH_1$ to $PH_{13}$) are supplied to the movement measuring unit (20), in which it is possible to ascertain the movement value (v) at a measurement instant ($t_n$) by forming an approximation function for the movement profile from the auxiliary position values (PH; $PH_1$ to $PH_{13}$) and a period duration ($T_H$) of the sampling clock signal.

11. Position measuring appliance according to one of the preceding claims, wherein the movement measuring unit (20) is a speed measuring unit (20) and the movement value (v) is a speed value (v).

12. Method for ascertaining a correction value (K) for transmitting a piece of movement information from a position measuring appliance (1) to downstream electronics (100), wherein the position measuring appliance (1) comprises a position measuring unit (10), a movement measuring unit (20), a computation unit (30) and an interface unit (40), having the following steps:

- a present position value ($P_n$) for two objects which are arranged so as to be able to move relative to one another in a direction of measurement is measured in the position measuring unit (10),
- a movement value (v) for the two objects arranged so as to be able to move relative to on another in a direction of measurement is ascertained in the movement measuring unit (20), and
- the correction value (K) is ascertained in the computation unit (30), wherein the correction value (K) can be used to calculate the movement value (v) in the downstream electronics (100) from the present position value ($P_n$), at least one preceding position value ($P_{n-1}$) measured in a preceding measurement cycle, and a controller cycle time ($T_R$), which indicates the interval of time between the measurements for position values (P; $P_n$; $P_{n-1}$), and the data word length of the correction value (K) is substantially shorter than the data word length of the movement value (v).

13. Method according to Claim 12, wherein the present position value ($P_n$), the movement value (v) and the correction value (K) are ascertained following reception of a data request command (RQ) which is sent from the downstream electronics (100) to the interface unit (40) of the position measuring appliance (1).

14. Method according to one of Claims 12 and 13, wherein the present position value ($P_n$) and the correction value (K) are transmitted via the interface unit (40) to the downstream electronics (100).

15. Method according to one of Claims 12 to 14, wherein the correction value (K) is a position correction value ($K_p$) or a movement correction value ($K_v$) or a time correction value ($K_T$).

16. Method according to one of Claims 12 to 15, wherein the movement measuring unit (20) also comprises a sampling clock generator (22) which produces a sampling clock signal having a period duration ($T_H$), and the movement measuring unit (20) is connected to the position measuring unit (10) by means of an auxiliary data request line (21), which can be used to request auxiliary position values (PH; $PH_1$ to $PH_{13}$) from the position measuring unit (10) by using auxiliary position request commands (RQH), and the ascertainment of the movement value (v) comprises the following steps:

- auxiliary position values (PH; $PH_1$ to $PH_{13}$) are requested at the interval of time of the period duration ($T_H$) of the sampling clock signal,
- auxiliary movement values are formed from the auxiliary position values (PH; $PH_1$ to $PH_{13}$) and the period duration ($T_H$) of the sampling clock signal,
- an approximation function for the movement profile is formed from the auxiliary movement values, and
- the movement value (v) at a measurement instant ($t_n$) is ascertained from the approximation function.

17. Method according to one of Claims 12 to 16, wherein the movement measuring unit (20) is a speed measuring unit (20) which ascertains a speed value (v) as the movement value (v).

**Revendications**

1. Appareil de mesure de position avec une unité de mesure de position (10), une unité de mesure de mouvement (20), une unité de calcul (30) et une unité d'interface (40), dans lequel

- avec l'unité de mesure de position (10), on peut mesurer des valeurs de position (P ; $P_n$, $P_{n-1}$) de deux objets disposés de manière mobile l'un par rapport à l'autre dans une direction de mesure,
- avec l'unité de mesure de mouvement (20), on peut déterminer une valeur de mouvement (v) des deux objets disposés de manière mobile l'un par rapport à l'autre dans une direction de mesure,
- les valeurs de position (P ; $P_n$, $P_{n-1}$) et la valeur de mouvement (v) sont acheminées vers l'unité de calcul (30) qui détermine une information de mouvement sous la forme d'une valeur de correction (K) apte à indiquer dans une électronique de suivi (100) à partir d'une valeur courante de position ($P_n$), au moins une valeur de position antérieure ($P_{n-1}$) d'une durée de cycle de régulation ($T_R$) indiquant la distance temporelle entre les mesures de valeurs de positions (P ; $P_n$, $P_{n-1}$) et à calculer la valeur de correction (K) de la valeur de mouvement (v) et la longueur des mots de données de la valeur de correction (K) est sensiblement inférieure à la longueur des mots de données de la valeur de mouvement (v).

2. Appareil de mesure de position selon la revendication 1, dans lequel l'unité d'interface (40) est reliée par l'intermédiaire d'une ligne de requête de données (41) à l'unité de mesure de position (10), à l'unité de mesure de mouvement (20) et à l'unité de calcul (30), celle-ci permettant de transmettre les ordres de requête de données (RQ) qui arrivent à l'unité d'interface (40) en provenance de l'électronique de suivi (100).

3. Appareil de mesure de position selon la revendication 2, dans lequel les ordres de requête de données (RQ) arrivent à l'unité d'interface (40) au rythme de la durée du cycle de régulation ($T_R$).

4. Appareil de mesure de position selon la revendication 1, dans lequel la valeur courante de la position ($P_n$) et la

valeur de correction (K) sont acheminées vers l'unité d'interface (40) et peuvent être transmises de l'unité d'interface (40) à l'électronique de suivi (100).

5.  Appareil de mesure de position selon une des revendications précédentes, dans lequel la valeur de correction (K) est une valeur de correction de position ($K_P$) ou une valeur de correction de mouvement ($K_v$) ou une valeur de correction du temps ($K_T$).

6.  Appareil de mesure de position selon une des revendications précédentes, dans lequel l'unité de calcul (30) comprend de plus une mémoire (31) dans laquelle il est possible de mémoriser la durée de cycle de régulation ($T_R$) et/ou des valeurs de position ($P$ ; $P_n$, $P_{n-1}$).

7.  Appareil de mesure de position selon une des revendications précédentes, dans lequel l'unité d'interface (40) est reliée à une unité d'interface (110) de l'électronique de suivi (100) par l'intermédiaire d'un canal de données (50).

8.  Appareil de mesure de position selon une des revendications précédentes, dans lequel le canal de données (50) est une liaison série d'interfaces.

9.  Appareil de mesure de position selon une des revendications précédentes, dans lequel l'unité de mesure de mouvement (20) comprend un générateur d'horloge d'exploration (22) qui génère un signal d'horloge d'exploration avec une durée de période ($T_H$) et l'unité de mesure de mouvement (20) est reliée à l'unité de mesure de position (10) par l'intermédiaire d'une ligne auxiliaire de requête de données (21) permettant de requérir des valeurs auxiliaires de position ($PH$ ; $PH_1$ à $PH_{13}$) de l'unité de mesure de position (10) à l'aide d'ordres auxiliaires de requête de positions (RQH).

10.  Appareil de mesure de position selon la revendication 9, dans lequel la requête de valeurs auxiliaires de position ($PH$ ; $PH_1$ à $PH_{13}$) s'effectue au rythme de la durée de la période ($T_H$) du signal d'horloge d'exploration et les valeurs auxiliaires de position ($PH$ ; $PH_1$ à $PH_{13}$) sont acheminées vers l'unité de mesure de mouvement (20), dans laquelle la valeur de mouvement (v) à un instant de mesure ($t_n$) peut être déterminée en formant une fonction d'approximation du déroulement du mouvement à partir des valeurs auxiliaires de position ($PH$ ; $PH_1$ à $PH_{13}$) et de la durée de la période ($T_H$) du signal d'horloge d'exploration.

11.  Appareil de mesure de position selon une des revendications précédentes, dans lequel l'unité de mesure de mouvement (20) est une unité de mesure de vitesse (20) et la valeur de mouvement (v) est une valeur de vitesse (v).

12.  Procédé de détermination d'une valeur de correction (K) pour la transmission d'une information de mouvement à partir d'un appareil de mesure de position (1) vers une électronique de suivi (100), dans lequel l'appareil de mesure de position (1) comprend une unité de mesure de position (10), une unité de mesure de mouvement (20), une unité de calcul (30) et une unité d'interface (40), avec les étapes suivantes :

     - mesure dans l'unité de mesure de position (10) d'une valeur courante de position ($P_n$) de deux objets disposés de manière mobile l'un par rapport à l'autre dans une direction de mesure,
     - détermination dans l'unité de mesure de mouvement (20) d'une valeur de mouvement (v) des deux objets disposés de manière mobile l'un par rapport à l'autre dans une direction de mesure et
     - détermination dans l'unité de calcul (30) de la valeur de correction (K), la valeur de correction (K) dans l'électronique de suivi (100) indiquant à partir de la valeur courante de position ($P_n$), au moins une valeur de position antérieure ($P_{n-1}$) mesurée dans un cycle de mesure antérieur et une durée de cycle de régulation ($T_R$) indiquant la distance temporelle entre les mesures de valeurs de positions ($P$ ; $P_n$, $P_{n-1}$), ce qui permet de calculer la valeur de mouvement (v) et la longueur des mots de données de la valeur de correction (K) qui est sensiblement inférieure à la longueur des mots de données de la valeur de mouvement (v).

13.  Procédé selon la revendication 12, dans lequel la détermination de la valeur courante de position ($P_n$), de la valeur de mouvement (v) et de la valeur de correction (K) s'effectue après réception d'un ordre de requête de données (RQ) envoyé par l'électronique de suivi (100) à l'unité d'interface (40) de l'appareil de mesure de position (1).

14.  Procédé selon une des revendications 12 ou 13, dans lequel la valeur courante de position ($P_n$) et la valeur de correction (K) sont transmises à l'électronique de suivi (100) par l'intermédiaire de l'unité d'interface (40).

15.  Procédé selon une des revendications 12 à 14, dans lequel la valeur de correction (K) est une valeur de correction de position (K$_P$) ou une valeur de correction de mouvement (K$_V$) ou une valeur de correction du temps (K$_T$).

16. Procédé selon une des revendications 12 à 15, dans lequel l'unité de mesure de mouvement (20) comprend de plus un générateur d'horloge d'exploration (22) qui génère un signal d'horloge d'exploration avec une durée de période (T$_H$) et l'unité de mesure de mouvement (20) est reliée à l'unité de mesure de position (10) par l'intermédiaire d'une ligne auxiliaire de requête de données (21) permettant de requérir des valeurs auxiliaires de position (PH ; PH$_1$ à PH$_{13}$) de l'unité de mesure de position (10) à l'aide d'ordres auxiliaires de requête de positions (RQH) et la détermination de la valeur de mouvement (v) comprend les étapes suivantes :

- requête de valeurs auxiliaires de position (PH ; PH$_1$ à PH$_{13}$) au rythme de la durée de la période (T$_H$) du signal d'horloge d'exploration,
- formation de valeurs auxiliaires de mouvement à partir des valeurs auxiliaires de position (PH ; PH$_1$ à PH$_{13}$) et de la durée de la période (T$_H$) du signal d'horloge d'exploration,
- formation d'une fonction d'approximation du déroulement du mouvement à partir des valeurs auxiliaires de mouvement et
- détermination de la valeur de mouvement (v) à un instant de mesure (t$_n$) à partir de la fonction d'approximation.

17. Procédé selon une des revendications 12 à 16, dans lequel l'unité de mesure de mouvement (20) est une unité de mesure de vitesse (20) qui détermine une valeur de vitesse (v) comme valeur de mouvement (v).

FIG. 1

FIG. 2a

FIG. 2b

FIG. 2c

FIG. 3